(19) Europäisches Patentamt

European Patent Office

Office européen des brevets

(11) **EP 1 643 254 A2**

(12) **EUROPEAN PATENT APPLICATION**

(43) Date of publication:
05.04.2006 Bulletin 2006/14

(51) Int Cl.:
*G01N 35/10* (2006.01)    *G01N 21/55* (2006.01)

(21) Application number: 05021676.1

(22) Date of filing: 04.10.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 04.10.2004 JP 2004291185

(71) Applicant: FUJI PHOTO FILM CO., LTD.
Minami-Ashigara-shi, Kanagawa-ken (JP)

(72) Inventor: Shimizu, Hitoshi
Ashigarakami-gun,
Kanagawa-ken (JP)

(74) Representative: Klunker . Schmitt-Nilson . Hirsch
Winzererstrasse 106
80797 München (DE)

(54) **Sample supplying method and device**

(57) An inlet pipette tip, into which a sample has been sucked, is fitted to an inlet of a flow path member of an analysis unit comprising a dielectric material block having a smooth surface, on which a thin film layer has been formed, and the flow path member, which is brought into close contact with a top surface of the thin film layer. An outlet pipette tip is fitted to an outlet of the flow path member. The sample is delivered from the inlet pipette tip through the inlet of the flow path member into a flow path of the flow path member. A fluid, which has been expelled by the sample from the flow path to the outlet of the flow path member, is recovered into the outlet pipette tip.

**FIG.9**

EP 1 643 254 A2

Printed by Jouve, 75001 PARIS (FR)

## Description

BACKGROUND OF THE INVENTION

Field of the Invention

This invention relates to a sample supplying method and device for supplying a sample into a sample flowpathof an analysis unit of an analysis apparatus, such as a surface plasmon sensor.

Description of the Related Art

As analysis apparatuses utilizing evanescent waves, surface plasmon sensors have heretofore been known. In metals, free electrons vibrate collectively, and a compression wave referred to as aplasmawave is thereby produced. The compression wave occurring on the metal surface and having been quantized is referred to as the surface plasmon. With the surface plasmon sensors, characteristics of samples are analyzed by the utilization of a phenomenon, in which the surface plasmon is excited by a light wave. Various type surface plasmon sensors have heretofore been proposed. As one of well known surface plasmon sensors, a surface plasmon sensor utilizing a system referred to as the Kretschman arrangement may be mentioned. The surface plasmon sensor utilizing the system referred to as the Kretschman arrangement is described in, for example, Japanese Unexamined Patent Publication No. 6(1994)-167443.

Basically, the surface plasmon sensor utilizing the system referred to as the Kretschman arrangement comprises (i) a dielectric material block having, for example, a prism-like shape, (ii) a metal film, which is formed on one surface of the dielectric material block and is brought into contact with a sample, (iii) a light source for producing a light beam, (iv) an optical system for irradiating the light beam to the dielectric material block at various different incidence angles such that a total reflection condition may be obtained at an interface between the dielectric material block and the metal film, (v) a photo detecting means for detecting the intensity of the light beam, which has been totally reflected from the interface described above, and (vi) analysis means for analyzing the state of surface plasmon resonance in accordance with the result of the detection having been made by the photo detecting means.

In order for the various different incidence angles described above to be obtained, a light beam having a comparatively small beam diameter may be caused to impinge upon the aforesaid interface with the incidence angle being altered. Alternatively, a light beam having a comparatively large beam diameter may be caused to impinge upon the aforesaid interface in a state of converged light or in a state of a divergent light, such that the light beam may contain components, which impinge at various different incidence angles upon the interface. In the former case, the reflected light beam, which is reflected from the interface with its reflection angle altering in accordance with the alteration of the incidence angle of the incident light beam, may be detected with a small photodetector, which moves by being interlocked with the alteration of the reflection angle, or maybe detected with an area sensor extending in the direction of alteration of the reflection angle. In the latter case, the light beam may be detected with an area sensor extending in a direction such that the area sensor is capable of receiving all of the light beam components having been reflected from the interface at various different reflection angles.

With the surface plasmon sensor having the constitution described above, in cases where the light beam impinges at a specific incidence angle $\theta_{SP}$, which is not smaller than the total reflection angle, upon the metal film, an evanescent wave having an electric field distribution occurs in the sample, which is in contact with the metal film, and the surface plasmon is excited by the evanescent wave and at the interface between the metal film and the sample. In cases where the wave vector of the evanescent wave coincides with the wave vector of the surface plasmon, and wave number matching is thus obtained, the evanescent wave and the surface plasmon resonate, and energy of the light transfers to the surface plasmon. As a result, the intensity of the reflected light beam, which is totally reflected from the interface between the dielectric material block and the metal film, becomes markedly low. Ordinarily, the lowering of the intensity of the reflected light beam is detected as a dark line by the photo detecting means described above.

The resonance described above occurs only in cases where the incident light beam is P-polarized light. Therefore, it is necessary for the incident light beam to be set previously so as to impinge upon the aforesaid metal film as the P-polarized light.

The specific incidence angle $\theta_{SP}$, which is not smaller than the total reflection angle, and which is associated with the lowering of the intensity of the reflected light beam, will hereinbelow be referred to as the attenuated total reflection angle (ATR angle) $\theta_{sp}$. In cases where the wave number of the surface plasmon is found from the ATR angle $\theta_{sp}$, a dielectric constant of the sample is capable of being calculated. Specifically, the formula shown below obtains.

$$ K_{SP}(\omega) = \frac{\omega}{c} \sqrt{\frac{\varepsilon_m(\omega)\varepsilon_s}{\varepsilon_m(\omega) + \varepsilon_s}} $$

wherein $K_{SP}$ represents the wave number of the surface plasmon, $\omega$ represents the angular frequency of the surface plasmon, c represents the light velocity in a vacuum, $\varepsilon_m$ represents the dielectric constant of the metal, and $\varepsilon_s$ represents the dielectric constant of the sample.

Specifically, in cases where the dielectric constant $\varepsilon_s$ of the sample is found, the refractive index of the sample, or the like, is capable of being found in accordance with a predetermined calibration curve, or the like. Therefore, in cases where the ATR angle $\theta_{SP}$ is found, the dielectric constant $\varepsilon_s$ of the sample is capable of being calculated. Accordingly, the characteristics with regard to the refractive index of the sample are capable of being calculated.

As a similar sensor utilizing the evanescent wave, a leaky mode sensor has heretofore been known. (The leaky mode sensor is described in, for example, "Surface Refracto-Sensor using Evanescent Waves: Principles and Instrumentations" by Takayuki Okamoto, Spectrum Researches, Vol. 47, No. 1, 1998, pp. 19-28.) Basically, the leaky mode sensor comprises (i) a dielectric material block having, for example, a prism-like shape, (ii) a cladding layer, which is formed on one surface of the dielectric material block, (iii) an optical waveguide layer, which is formed on the cladding layer and is brought into contact with a sample, (iv) a light source for producing a light beam, (v) an optical system for irradiating the light beam to the dielectric material block at various different incidence angles such that a total reflection condition may be obtained at an interface between the dielectric material block and the cladding layer, (vi) photo detecting means for detecting the intensity of the light beam, which has been totally reflected from the interface described above, and (vii) analysis means for analyzing the state of excitation of a guided mode in accordance with the result of the detection having been made by the photo detecting means.

With the leaky mode sensor having the constitution described above, in cases where the light beam impinges at an incidence angle, which is not smaller than the total reflection angle, upon the cladding layer via the dielectric material block, only the light having a certain specific wave number, which light has impinged at a specific incidence angle upon the cladding layer, is propagated in the guided mode in the optical waveguide layer after passing through the cladding layer. In cases where the guidedmode is thus excited, approximately all of the incident light is taken into the optical waveguide layer. Therefore, in such cases, the attenuated total reflection occurs, and the intensity of the light totally reflected from the aforesaid interface becomes markedly low. Also, the wave number of the guided optical wave depends upon the refractive index of the sample, which is located on the optical waveguide layer. Therefore, in cases where the ATR angle $\theta_{SP}$ is detected, the refractive index of the sample and characteristics of the sample with regard to the refractive index of the sample are capable of being analyzed.

In the fields of pharmaceutical research, and the like, the surface plasmon sensor and the leaky mode sensor described above are often utilized for random screening for finding out an analyte, which is capable of undergoing the binding with a desired ligand. In such cases, the ligand is fixed to the aforesaid thin film layer (the metal film in the cases of the surface plasmon sensor, or the combination of the cladding layer and the optical waveguide layer in the cases of the leaky mode sensor), and a buffer (a liquid sample) containing an analyte is supplied onto the ligand. Also, at each of stages after the passage of predetermined periods of time, the aforesaidATR angle $\theta_{sp}$ is measured.

In cases where the analyte contained in the buffer is a substance capable of undergoing the binding with the ligand, the refractive index of the ligand alters with the passage of time. Therefore, the aforesaid ATR angle $\theta_{SP}$ is measured at each of stages after the passage of predetermined periods of time, and a judgment is made as to whether an alteration of the ATR angle $\theta_{sp}$ has been or has not been occurred. In this manner, a judgment is capable of being made as to whether the binding of the analyte with the ligand has or has not occurred, i.e. as to whether the analyte is or is not the specific substance capable of undergoing the binding with the ligand. Examples of the combinations of the analytes and the ligands include the combination of an antigen and an antibody and the combination of an antibody and a different antibody. Specifically, examples of the analyses with regard to the combinations of the analytes and the ligands include an analysis, wherein a rabbit anti-human IgG antibody is employed as the ligand, wherein a detection is made as to whether a human IgG antibody acting as the analyte has or has not been bound to the rabbit anti-human IgG antibody, and wherein a quantitative analysis of the human IgG antibody is made.

In order for the state of the binding of the analyte, which is contained in the buffer, with the ligand to be detected, the ATR angle $\theta_{SP}$ itself need not necessarily be detected. Alternatively, for example, after a base line acting as a reference has been measured by use of a buffer, which does not contain an analyte, the quantity of the alteration of the ATR angle $\theta_{SP}$ may be measured at the time at which a buffer containing the analyte has been supplied onto the ligand, and the state of the binding of the analyte with the ligand may be detected in accordance with the quantity of the alteration of the ATR angle $\theta_{SP}$.

Also, as the analysis apparatus, such as the surface plasmon sensor described above, there has been known a sensor for making an analysis, wherein a buffer is continuously supplied by use of a flow path means and onto a thin film layer, to which a ligand has been fixed. In cases where the sensor provided with the flow path means is utilized, during the detection of the state of the binding of the ligand and an analyte with each other, the fresh buffer is continuously supplied onto the thin film layer. Therefore, the concentration of the analyte contained in the buffer supplied onto the thin film layer does not alter, and the detection of the state of the binding is capable of being made accurately. Further, after it has been detected that the ligand and the analyte have been bound to each other, a buffer containing no analyte may be caused to flow on the thin film layer, to which the product of the binding of the ligand and the analyte with each other has been fixed. In this manner, the state of separation of the ligand and the analyte from each other is capable of being detected. Further, for example, in cases where a gas is employed as the sample, or in cases where a buffer containing a gas is employed as the sample, the sample is capable of being easily supplied onto the thin film layer by use of the flow path means.

As a technique for supplying the sample into the flow path means described above, it may be considered to employ a technique, wherein a pipe for waste liquid processing is inserted into an outlet side of the flow path means, a pipette or a pipe for sample supplying is inserted into an inlet side of the flow path means, and the sample is thereby supplied into the flow path means. In such cases, it is necessary for the pipe to be utilized. The flow path means for use in the analysis apparatus, such as the surface plasmon sensor, is constituted such that the inside diameter of the flow path is as small as at most several millimeters. Therefore, as the pipe to be connected to the flow path, it is necessary for a pipe having a markedly small inside diameter to be utilized. Accordingly, if the pipe is utilized for supplying the sample into the flow path means, the problems will occur in that, for example, clogging occurs within the pipe, and maintenance characteristics at the time of the analysis are not capable of being kept good.

SUMMARY OF THE INVENTION

The primary object of the present invention is to provide a sample supplying method for supplying a sample into a sample supply flow path of an analysis unit of an analysis apparatus, such as a surface plasmon sensor, wherein a pipe need not be utilized, and wherein maintenance characteristics at the time of an analysis are capable of being kept good.

Another object of the present invention is to provide a sample supplying device for carrying out the sample supplying method.

The present invention provides a sample supplying method for supplying a sample into an analysis unit comprising (a), a dielectric material block having a smooth surface, on which surface a thin film layer has been formed, and (b) a flow path member, which is brought into close contact with a top surface of the thin film layer having been formed on the dielectric material block,

the flow path member being constituted of a measurement section, which stands facing the thin film layer having been formed on the dielectric material block, a supply path extending from an inlet of the flow path member, which inlet is open at a top surface of the flowpath member, to one end of the measurement section, and a discharging path extending from the other end of the measurement section to an outlet of the flow path member, which outlet is open at the top surface of the flow path member,

the flow path member being provided with a flow path, which extends from the inlet of the flow path member through the measurement section of the flow path member to the outlet of the flow path member, such that the sample is capable of flowing through the flow path,

the method comprising the steps of:

   i) fitting an inlet pipette tip to the inlet of the flow path member, the sample having been sucked into the inlet pipette tip,
   ii) fitting an outlet pipette tip to the outlet of the flow path member,
   iii) delivering the sample, which has been sucked into the inlet pipette tip, from the inlet pipette tip through the inlet of the flow path member into the flow path of the flow path member, and
   iv) recovering a fluid, which has been expelled by the sample from the flow path to the outlet of the flow path member, into the outlet pipette tip.

In the sample supplying method in accordance with the present invention, the inlet pipette tip is fitted to the inlet of the flow path member, and the outlet pipette tip is fitted to the outlet of the flow path member. Specifically, in such cases, an orifice of the inlet pipette tip may be brought into close contact with the inlet periphery of the flow path member. Also, the orifice of the outlet pipette tip may be brought into close contact with the outlet periphery of the flow path member. Further, only the sample having been sucked into the inlet pipette tip may be injected from the inlet pipette tip into the flow path of the flow path member. Alternatively, the orifice of the inlet pipette tip may be inserted into the inlet of the flow path member. Also, the orifice of the outlet pipette tip may be inserted into the outlet of the flow path member. In this manner, the sample having been sucked into the inlet pipette tip may be injected from the inlet pipette tip into the flow path of the flow path member. The term "bringing an orifice of a pipette tip into close contact with an inlet periphery or an outlet periphery of a flow path member" as used herein embraces both the cases, wherein the pipette tip and the flow path member are directly brought into close contact with each other, and the cases, wherein a different member is located between the pipette tip and the flow path member and wherein the pipette tip, the different member, and the flow path member are brought into close contact with one another.

Also, in the sample supplying method in accordance with the present invention, the fluid, which has been expelled by the sample from the flow path to the outlet of the flow path member, is recovered into the outlet pipette tip. Specifically, a fluid, such as a liquid sample or air, is present within the flow path of the flow path member. When the sample the sample, which has been sucked into the inlet pipette tip, is delivered from the inlet pipette tip through the inlet of the flow path member into the flow path of the flow path member, the fluid described above is expelled by the sample toward the side of the outlet of the flow path member. The thus expelled fluid is recovered into the outlet pipette tip. In cases where a quantity of the sample, which quantity is larger than the volume of the flow path, is delivered from the inlet pipette tip through the inlet of the flow path member into the flow path of the flow pathmember, all of the fluid contained in the flowpath is expelled from the flow path, and part of the sample having been delivered from the inlet pipette tip through the inlet of the flow path member into the flowpathof the flowpathmember is then discharged from the flow path. In such cases, both the fluid having been contained in the flow path and the part of the sample having been delivered from the inlet pipette tip through the inlet of the flow path member into the flow path of the flow path member may be recovered into the outlet pipette tip.

Further, the sample may be recovered by the outlet pipette tip and discharged from the outlet of the flow path member; and

liquid, which is expelled toward the inlet of the flow path by the sample, may be recovered by the inlet pipette chip. That is, the sample may be caused to flow backwards from the outlet to the inlet.

The present invention also provides a sample supplying device for supplying a sample into an analysis unit comprising (a) a dielectric material block having a smooth surface, on which surface a thin film layer has been formed, and (b) a flow path member, which is brought into close contact with a top surface of the thin film layer having been formed on the dielectric material block,

the flow path member being constituted of a measurement section, which stands facing the thin film layer having been formed on the dielectric material block, a supply path extending from an inlet of the flow path member, which inlet is open at a top surface of the flowpath member, to one end of the measurement section, and a discharging path extending from the other end of the measurement section to an outlet of the flow path member, which outlet is open at the top surface of the flow path member,

the flow path member being provided with a flow path, which extends from the inlet of the flow path member through the measurement section of the flow path member to the outlet of the flowpath member, such that the sample is capable of flowing through the flow path,

the device comprising:

i) an inlet pipette tip, which is adapted to be fitted to the inlet of the flow path member,
ii) an outlet pipette tip, which is adapted to be fitted to the outlet of the flow path member,
iii) an inlet pipette tip fitting section, to which the inlet pipette tip is capable of being releasably fitted,
iv) an outlet pipette tip fitting section, to which the outlet pipette tip is capable of being releasably fitted, and
v) an inlet piston, which is associated with the inlet pipette tip fitting section and is capable of being operated for sucking air through the inlet pipette tip fitting section and discharging air through the inlet pipette tip fitting section.

The sample supplying device in accordance with the present invention should preferably be modified such that the outlet pipette tip fitting section is provided with a check valve for preventing the sample, which has entered from the side of the outlet pipette tip, from undergoing a back flow.

Also, the sample supplying device in accordance with the present invention should preferably be modified such that the device further comprises an outlet piston, which is associated with the outlet pipette tip fitting section and is capable of being operated for sucking air through the outlet pipette tip fitting section and discharging air through the outlet pipette tip fitting section, and the inlet piston and the outlet piston are capable of being controlled with independent control operations.

Further, the sample supplying device in accordance with the present invention may be modified such that the device comprises a plurality of sets of the inlet pipette tips, the outlet pipette tips, the inlet pipette tip fitting sections, and the outlet pipette tip fitting sections. In such cases, one inlet piston may be associated with each of the inlet pipette tip fitting sections. Alternatively, one inlet piston may be associated with the plurality of the inlet pipette tip fitting sections.

In each of the sample supplying method and the sample supplying device in accordance with the present invention, the analysis unit may be constituted as the analysis unit for use in a surface plasmon sensor, wherein a metal film is utilized as the thin film layer, and wherein an analysis is made by the utilization of the effects of the surface plasmon resonance. Alternatively, the analysis unit may be constituted as the analysis unit for use in a leaky mode sensor, wherein a combination of a cladding layer, which is formed on one surface of the dielectric material block, and an optical waveguide layer, which is formed on the cladding layer, is utilized as the thin film layer, and wherein an analysis is made by the utilization of the effects of the excitation of the guided mode in the optical waveguide layer.

With the sample supplying method in accordance with the present invention, the sample is supplied into the analysis unit comprising (a) the dielectric material block having the smooth surface, on which surface the thin film layer has been formed, and (b) the flow path member, which is brought into close contact with the top surface of the thin film layer having been formed on the dielectric material block. The flow path member is constituted of the measurement section, which stands facing the thin film layer having been formed on the dielectric material block, the supply path extending from the inlet of the flow path member, which inlet is open at the top surface of the flow path member, to the one end of the measurement section, and the discharging path extending from the other end of the measurement section to the outlet of the flow path member, which outlet is open at the top surface of the flow path member. The flow path member is provided with the flow path, which extends from the inlet of the flow path member through the measurement section of the flow path member to the outlet of the flow path member, such that the sample is capable of flowing through the flow path. The sample supplying method comprises the steps of: (i) fitting the inlet pipette tip to the inlet of the flow path member, the sample having been sucked into the inlet pipette tip, (ii) fitting the outlet pipette tip to the outlet of the flow path member, (iii) delivering the sample, which has been sucked into the inlet pipette tip, from the inlet pipette tip through the inlet of the flow path member into the flow path of the flow path member, and (iv) recovering the fluid, which has been expelled by the sample from the flow path to the outlet of the flow path member, into the outlet pipette tip. Therefore, with the sample supplying method in accordance with the present invention, for the supplying of the sample, a pipe need not be located for each of the side of the inlet of the flow path member and the side of the outlet of the flow path member. Also, a disposable type of a pipette tip is capable of being utilized as each of the inlet pipette tip and the outlet pipette tip. Accordingly, the maintenance characteristics at the time of the analysis are capable of being kept good.

With the sample supplying device in accordance with the present invention, the sample is supplied into the analysis unit comprising (a) the dielectric material block having the smooth surface, on which surface the thin film layer has been formed, and (b) the flow path member, which is brought into close contact with the top surface of the thin film layer having been formed on the dielectric material block. The flow path member is constituted of the measurement section, which stands facing the thin film layer having been formed on the dielectric material block, the supply path extending from the inlet of the flow path member, which inlet is open at the top surface of the flow path member, to the one end of the measurement section, and the discharging path extending from the other end of the measurement section to the outlet of the flow path member, which outlet is open at the top surface of the flow path member. The flow path member is provided with the flow path, which extends from the inlet of the flow path member through the measurement section of the flow path member to the outlet of the flow path member, such that the sample is capable of flowing through the flow path. The sample supplying device in accordance with the present invention comprises: (i) the inlet pipette tip, which is adapted to be fitted to the inlet of the flow path member, (ii) the outlet pipette tip, which is adapted to be fitted to the outlet of the flow path member, (iii) the inlet pipette tip fitting section, to which the inlet pipette tip is capable of being releasably fitted, (iv) the outlet pipette tip fitting section, to which the outlet pipette tip is capable of being releasably fitted, and (v) the inlet piston, which is associated with the inlet pipette tip fitting section and is capable of being operated for sucking air through the inlet pipette tip fitting section and discharging air through the inlet pipette tip fitting section. Therefore, with the sample supplying device in accordance with the present invention, for the supplying of the sample, a pipe need not be located for each of the side of the inlet of the flow path member and the side of the outlet of the flow path member. Also, a disposable type of a pipette tip is capable of being utilized as each of the inlet pipette tip and the outlet pipette tip. Accordingly, the maintenance characteristics at the time of the analysis are capable of being kept good.

The sample supplying device in accordance with the present invention maybe modified such that the outlet pipette tip fitting section is provided with the check valve for preventing the sample, which has entered from the side of the outlet pipette tip, from undergoing a back flow. With the modification described above, the problems are capable of being prevented from occurring in that, at the time at which the outlet pipette tip is removed from the flow path of the flow path member, the sample, which has entered from the side of the outlet pipette tip, undergoes the back flow from the outlet pipette tip into the flow path of the flow path member.

Also, the sample supplying device in accordance with the present invention may be modified such that the device further comprises the outlet piston, which is associated with the outlet pipette tip fitting section and is capable of being operated for sucking air through the outlet pipette tip fitting section and discharging air through the outlet pipette tip fitting section, and such that the inlet piston and the outlet piston are capable of being controlled with independent control operations. With the modification described above, in cases where the sample is to be supplied into the flow path of the flowpathmember, the sample is capable of being supplied smoothly with the operation, in which air is discharged by use of the inlet piston from the inlet pipette tip fitting section into the inlet pipette tip having been fitted to the inlet pipette tip fitting section, and in which air is sucked by use of the outlet piston from the outlet pipette tip having been fitted to the outlet pipette tip fitting section into the outlet pipette tip fitting section. Also, in cases where the sample has been retained in the outlet pipette tip, the sample is capable of being fed reversely from the outlet pipette tip into the flow path of the flow path member with the operation, in which air is discharged by use of the outlet piston from the outlet pipette tip fitting section into the outlet pipette tip having been fitted to the outlet pipette tip fitting section, and in which air is sucked by use of the inlet piston from the inlet pipette tip having been fitted to the inlet pipette tip fitting section into the inlet pipette tip fitting section. Further, by the provision of the outlet piston, the region within the outlet pipette tip is capable of being set at a negative pressure. Therefore, the problems are capable of being prevented from occurring in that, at the time at which the outlet pipette tip is removed from the flow path of the flow path member, the sample, which has been retained in the outlet pipette tip, undergoes the back flow from the outlet pipette tip into the flow path of the flow path member.

With the sample supplying device in accordance with the present invention, wherein the device comprises the plurality of the sets of the inlet pipette tips, the outlet pipette tips, the inlet pipette tip fitting sections, and the outlet pipette tip fitting sections, sample supplying operations are capable of being performed simultaneously and in a parallel manner with respect to a plurality of flow paths of the flow path member.

BRIEF DESCRIPTION OF THE DRAWINGS

Figure 1 is a schematic plan view showing a surface plasmon sensor, in which a first embodiment of the sample supplying device in accordance with the present invention is employed,

Figure 2 is a plan view showing a measuring system of the surface plasmon sensor of Figure 1,

Figure 3 is a side view showing the measuring system of the surface plasmon sensor of Figure 1,

Figure 4 is a perspective view showing an analysis unit of the surface plasmon sensor of Figure 1,

Figure 5 is a perspective exploded view showing the analysis unit of Figure 4,

Figure 6 is a plan view showing the analysis unit of Figure 4,

Figure 7 is a sectional view taken on line VII-VII of Figure 6,

Figure 8 is a schematic view showing the first embodiment of the sample supplying device in accordance with the present invention,

Figure 9 is a sectional view taken on line IX-IX of Figure 2,

Figure 10 is a block diagram showing an electrical constitution of the measuring system of the surface plasmon sensor of Figure 1,

Figure 11A is a graph showing relationship between an incidence angle of a light beam upon an interface and a detected optical intensity of the light beam, which has been totally reflected from the interface, in the measuring system of the surface plasmon sensor of Figure 1,

Figure 11B is an explanatory view showing photodiodes arrayed in a direction in the measuring system of the surface plasmon sensor of Figure 1,

Figure 11C is a graph showing relationship between the incidence angle of the light beam upon the interface and a differentiation value of values of an optical intensity detection signal representing the optical intensity of the light beam, which has been totally reflected from the interface, in the measuring system of the surface plasmon sensor of Figure 1,

Figure 12 is a schematic view showing a second embodiment of the sample supplying device in accordance with the present invention, and

Figure 13 is a sectional view showing a different embodiment of the sample supplying device in accordance with the present invention.

DESCRIPTION OF THE PREFERRED EMBODIMENTS

The present invention will hereinbelow be described in further detail with reference to the accompanying drawings.

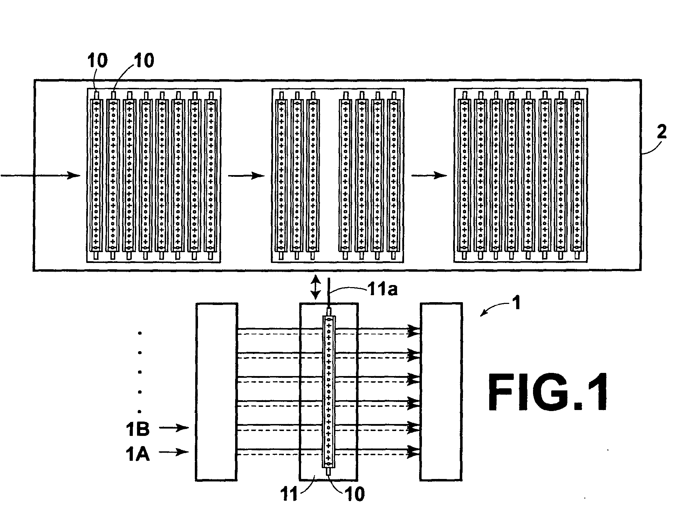

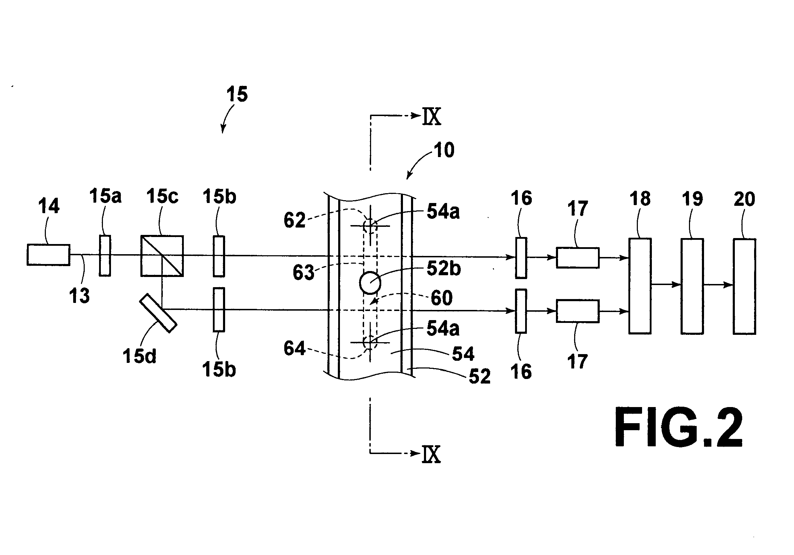

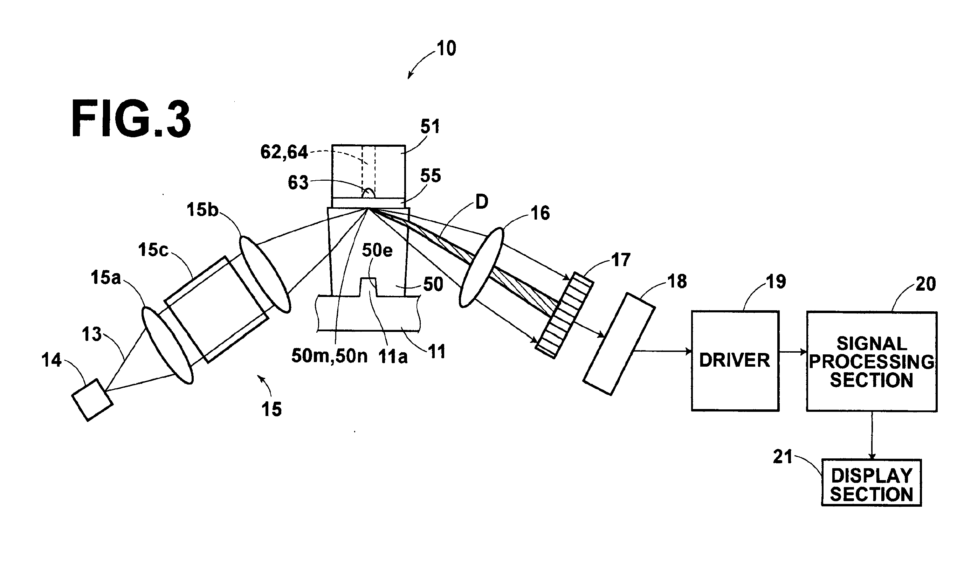

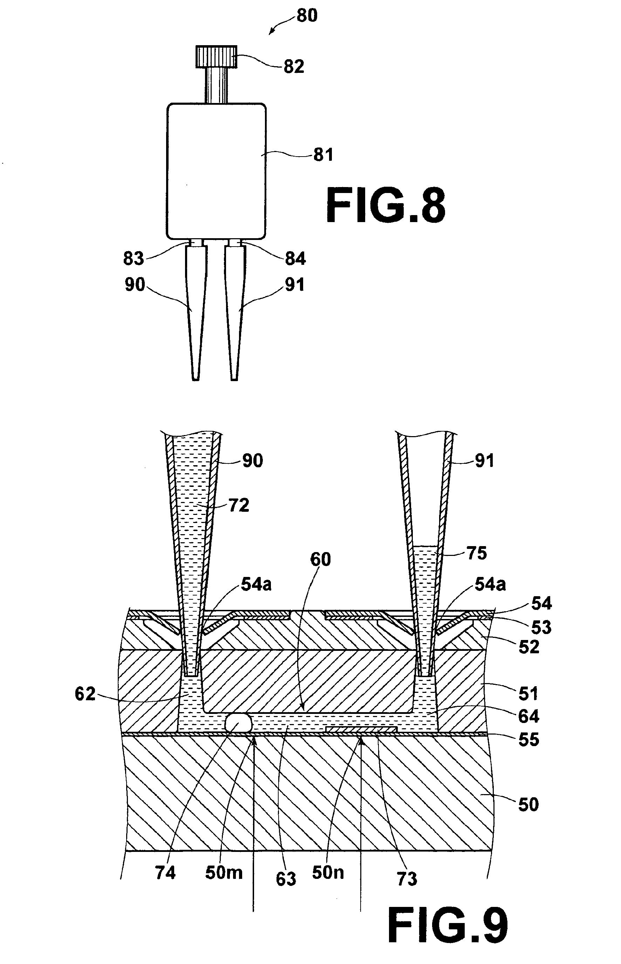

A first embodiment of the sample supplying device in accordance with the present invention is constituted for supplying a sample into an analysis unit of an analysis apparatus describedbelow. The analysis apparatus will first be described hereinbelow. The analysis apparatus is constituted as a surface plasmon sensor, wherein light beams are irradiated to a plurality of measurement sections of the analysis unit in a parallel manner, and wherein analyses of a plurality of samples are thus capable of being made simultaneously. Figure 1 is a schematic plan view showing a surface plasmon sensor, in which a first embodiment of the sample supplying device in accordance with the present invention is employed. Figure 2 is a plan view showing a measuring system of the surface plasmon sensor of Figure 1. Figure 3 is a side view showing the measuring system of the surface plasmon sensor of Figure 1. Figure 9 is a sectional view taken on line IX-IX of Figure 2.

With reference to Figure 1, a surface plasmon sensor 1 is the surface plasmon sensor, wherein light beams are irradiated to each of a plurality of measurement sections of an analysis unit 10 in a parallel manner, and wherein analyses of a plurality of samples are thus capable of being made simultaneously. The surface plasmon sensor 1 comprises a plurality of surface plasmon measuring systems 1A, 1B, ... , whichhave identical constitutions . The constitution of each of the measuring systems 1A, 1B, ... will be described hereinbelow. In the explanation made below, the suffixes A, B, ... for representing the respective elements of the measuring systems 1A, 1B, ... will be omitted for facilitating the explanation.

As illustrated in Figure 2, Figure 3, and Figure 9, each of the measuring systems 1A, 1B, ... comprises a laser beam source 14 for producing one laser beam 13. The laser beam source 14 may be constituted of, for example, a semiconductor laser. Each of the measuring systems 1A, 1B, ... also comprises an optical system 15 for irradiating the laser beam 13, which has been produced by the laser beam source 14, to the analysis unit 10, such that the laser beam 13 impinges upon each of an interface 50m, which is the interface between a dielectric material block 50 and a region of a metal film 55 located under a flow path 60 (containing a measurement section 63), and an interface 50n, which is the interface between the dielectric material block 50 and a different region of the metal film 55 located under the flow path 60, at various different incidence angles and in a parallel manner. Each of the measuring systems 1A, 1B, ... further comprises two collimator lenses 16, 16. Each of the collimator lenses 16, 16 collimates one of the laser beam 13, which has been totally reflected from the interface 50m, and the laser beam 13, which has been totally reflected from the interface 50n. Each of the measuring systems 1A, 1B, ... still further comprises two photodiode arrays 17, 17. Each of the photodiode arrays 17, 17 detects one of the laser beam 13, which has been totally reflected from the interface 50m and has then been collimated by the corresponding collimator lens 16, and the laser beam 13, which has been totally reflected from the interface 50m and has then been collimated by the corresponding collimator lens 16. Each of the measuring systems 1A, 1B, ... also comprises a differential amplifier array 18, which is connected to the two photodiode arrays 17, 17. Each of the measuring systems 1A, 1B, ... further comprises a driver 19. Each of the measuring systems 1A, 1B, ... still further comprises a signal processing section 20, which is constituted of a computer system, or the like. Each of the measuring systems 1A, 1B, ... also comprises a display section 21, which is connected to the signal processing section 20. The signal processing section 20 is provided with storage means (not shown) for storing data representing results of a preliminary measurement for use in a collecting operation, which will be described later. The signal processing section 20 acts also as correction means.

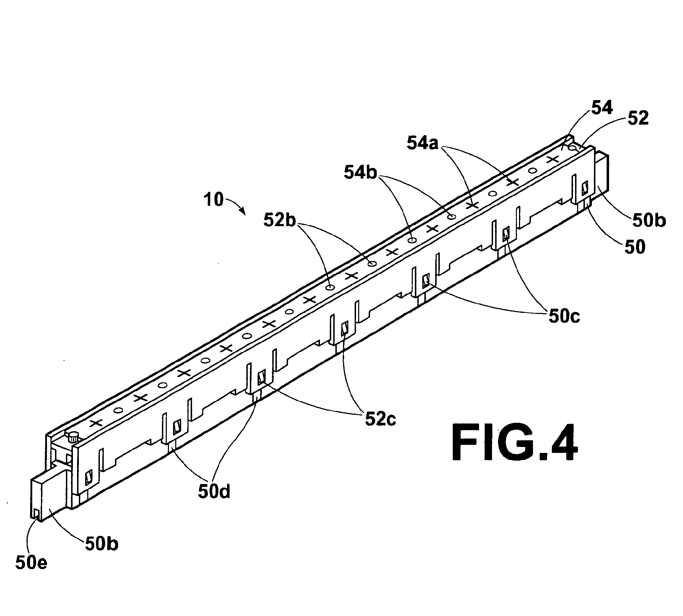

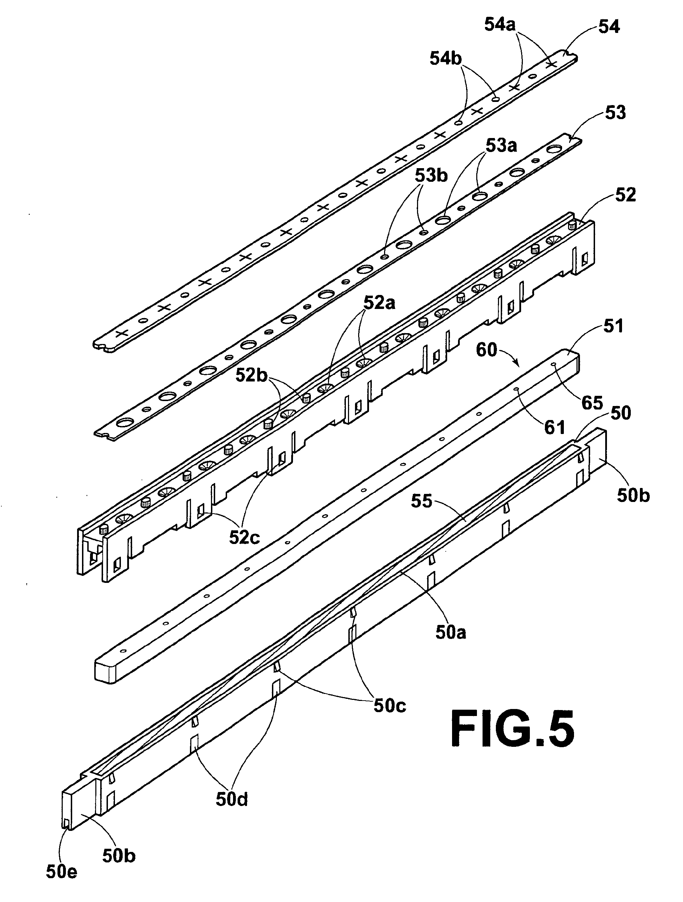

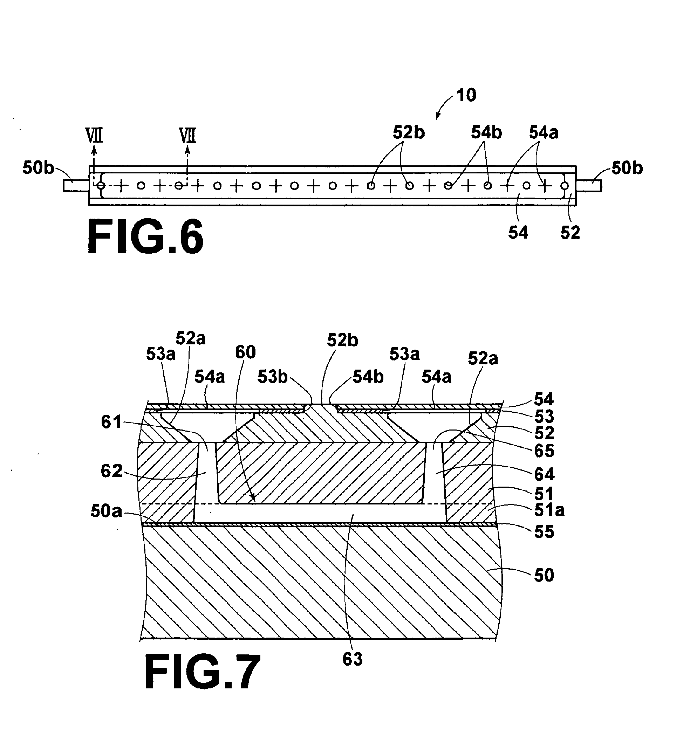

Firstly, the analysis unit 10 will be described hereinbelow. Figure 4 is a perspective view showing the analysis unit 10. Figure 5 is a perspective exploded view showing the analysis unit 10. Figure 6 is a plan view showing the analysis unit 10. Figure 7 is a sectional view taken on line VII-VII of Figure 6.

The analysis unit 10 comprises the dielectric material block 50, which is transparent with respect to the laser beam 13. The dielectric material block 50 has a smooth top surface 50a (illustrated in Figure 5 and Figure 7). The metal film 55 acting as the thin film layer has been formed on the smooth top surface 50a of the dielectric material block 50. The analysis unit 10 also comprises a flow path member 51, which is located on the metal film 55 having been formed on the dielectric material block 50 such that the flow path member 51 is in close contact with the metal film 55. The analysis unit 10 further comprises a support member 52, which is engaged with the dielectric material block 50 and supports the flow path member 51 on the top surface 50a of the dielectric material block 50.

The dielectric material block 50 is made from a transparent resin, or the like. The dielectric material block 50 has a main body, which has a trapezoidal cross-sectional shape taken on a line normal to the longitudinal direction of the dielectric material block 50, such that a bottom side of the trapezoidal cross-section is shorter than the top side of the trapezoidal cross-section. Each of support sections 50b, 50b is formed at one of opposite ends of the main body of the dielectric material block 50, which opposite ends are taken with respect to the longitudinal direction of the dielectric material block 50. Each of the support sections 50b, 50b is formed such that a width of each of the support sections 50b, 50b when being seen from above (or from below) is smaller than the width of the main body of the dielectric material block 50. The dielectric material block 50 is combined with a prism section into an integral body. The prism section causes the laser beam 13, which has been produced by the laser beam source 14 of the analysis apparatus, to impinge upon each of the interface 50m and the interface 50n between the dielectric material block 50 and the regions of the metal film 55. The prism section also causes the laser beam 13, which has been totally reflected from each of the interface 50m and the interface 50n, to be radiated out toward the photo detecting means of the analysis apparatus. A plurality of engagement protrusions 50c, 50c, ... are formed on each of opposite side surfaces of the main body of the dielectric material block 50, which side surfaces extend in the longitudinal direction of the dielectric material block 50. Each of the engagement protrusions 50c, 50c, ... are engaged with one of engagement holes 52c, 52c, ..., which are formed in the support member 52 as will be described later. Also, a plurality of vertical protrusions 50d, 50d, ..., each of which has a vertically extending side face, are formed on each of the opposite side surfaces of the main body of the dielectric material block 50, which side surfaces extend in the longitudinal direction of the dielectric material block 50. On each of the opposite side surfaces of the main body of the dielectric material block 50, each of the engagement protrusions 50c, 50c, ... stands facing one of the vertical protrusions 50d, 50d, ... Further, a slide groove 50e is formed in the bottom surface of the main body of the dielectric material block 50, such that the slide groove 50e extends in parallel with the longitudinal direction of the dielectric material block 50.

The flow path member 51 is provided with a plurality of flow paths 60, 60, ..., each of which extends in the longitudinal direction of the flow path member 51. The plurality of the flow paths 60, 60, ... are located along a straight line. Each of the flow paths 60, 60, ... is constituted of a supply path 62, which extends from an inlet 61 to the measurement section 63, and a discharging path 64, which extends from the measurement section 63 to an outlet 65.

As illustrated in Figure 7, at the section of the flow path member 51 provided with each of the flow paths 60, 60, ..., the inlet 61 and the outlet 65 are open at the top surface of the flow path member 51. Also, an outlet of the supply path 62 and an inlet of the discharging path 64 are open at the bottom area of the flow path member 51. Further, a sealing section 51a, which surrounds the outlet of the supply path 62 and the inlet of the discharging path 64, is located at the area of the bottom of the flow path member 51, which area comes into contact with the surface of the metal film 55. The measurement section 63 is formed at the inside of the space defined by the sealing section 51a. Therefore, in cases where the flow path member 51 is located such that the flow path member 51 is in close contact with the top surface of the metal film 55 having been formed on the dielectric material block 50, the measurement section 63 formed at the inside of the space defined by the sealing section 51a acts as the flow path. Accordingly, a buffer is capable of flowing along an approximately U-shaped path from the inlet 61 through the measurement section 63 to the outlet 65. The sealing section 51a may be combined with the top part of the flow path member 51 into an integral body. Alternatively, the sealing section 51a may be made from a material different from the material of the top part of the flow path member 51 and may be fitted to the top part of the flow path member 51. By way of example, an O-ring acting as the sealing section 51a may be fitted to the bottom part of the flow path member 51.

In the cases of the analysis apparatus, such as the surface plasmon sensor, in which the analysis unit 10 is utilized, it is assumed that a liquid sample containing a protein is used. However, if the protein contained in the liquid sample fixes to the flow path 60, the analysis will not be capable of being made accurately. Therefore, the flow path member 51 should preferably be made from a material, which does not have non-specific adsorption characteristics with respect to proteins. Specifically, the flow path member 51 should preferably be made from a material, such as a silicone or a polypropylene. In cases where the flow path member 51 is made from the elastic material described above, the flow path member 51 is capable of being reliably located on the metal film 55 such that the flow path member 51 is in close contact with the metal film 55. Therefore, the problems are capable of being prevented from occurring in that the liquid sample leaks from the contact surface of the flow path member 51. In order for adsorption of proteins, and the like, to be eliminated, the flow path 60 maybe subjected to hydrophilic characteristics imparting processing.

The support member 52 is made from an elastic material, such as a polypropylene. The support member 52 has an approximately inverted U-shaped cross-section taken on a line normal to the longitudinal direction of the support member 52. A plurality of pipette receiving holes 52a, 52a, ... are formed in a top plate (i.e., a support plate section) of the support member 52. Each of the pipette receiving holes 52a, 52a, ... is tapered such that the pipette receiving hole 52a becomes narrow toward the flow path member 51. Each of the pipette receiving holes 52a, 52a, ... is formed at the position that stands facing one of the inlets 61, 61, ... and the outlets 65, 65, ... of the flow path member 51. Also, the top surface of the support member 52 is provided with bosses 52b, 52b, ... for position adjustment. Each of the bosses 52b, 52b, ... is located at a position between adjacent pipette receiving holes 52a, 52a. Also, one boss 52b is located at the position more outward than each of the twopipette receivingholes 52a, 52a, which are located at the opposite ends of the support member 52.

An evaporation preventing member 54 is adhered by a double-faced adhesive tape (i.e., an adhesion member) 53 onto the top surface of the support member 52. As illustrated in Figure 5, the double-faced adhesive tape 53 is provided with a plurality of pipette receiving holes 53a, 53a, ..., each of which is formed at the position that stands facing one of the pipette receiving holes 52a, 52a, ... of the support member 52. Also, the double-faced adhesive tape 53 is provided with a plurality of position adjusting holes 53b, 53b, ..., each of which is formed at the position that stands facing one of the bosses 52b, 52b, ... of the support member 52. The evaporation preventing member 54 is provided with a plurality of slits 54a, 54a, ..., each of which is formed at the position that stands facing one of the pipette receiving holes 52a, 52a, ... of the support member 52. Also, the evaporation preventing member 54 is provided with a plurality of position adjusting holes 54b, 54b, ..., each of which is formed at the position that stands facing one of the bosses 52b, 52b, ... of the support member 52. Each of the position adjusting holes 53b, 53b, ... of the double-faced adhesive tape 53 and each of the position adjusting holes 54b, 54b, ... of the evaporation preventing member 54 are inserted onto the corresponding one of the bosses 52b, 52b, ... of the support member 52. In this state, the evaporation preventing member 54 is adhered to the top surface of the support member 52. As a result, each of the slits 54a, 54a, ... of the evaporation preventing member 54 stands facing one of the inlets 61, 61, ... and the outlets 65, 65, ... of the flow path member 51. It is necessary for the evaporation preventing member 54 to be made from an elastic material, such that the pipette is capable of being inserted through each of the slits 54a, 54a, ... Specifically, the evaporation preventing member 54 may be made from a silicone or a polypropylene.

Alternatively, the support member 52 and the evaporation preventing member 54 may be formed as an integral body. As another alternative, the flow path member 51, the support member 52, and the evaporation preventing member 54 may be formed as an integral body.

Also, each of side plates of the support member 52, which side plates extend in the longitudinal direction of the support member 52, is provided with the plurality of the engagement holes 52c, 52c, ... for engaging with the engagement protrusions 50c, 50c, ... of the dielectric material block 50. Each of the engagement holes 52c, 52c, ... of the support member 52 is engaged with one of the engagement protrusions 50c, 50c, ... of the dielectric material block 50, and the support member 52 and the dielectric material block 50 are thus engaged with each other. In this state, the flow path member 51 is sandwiched between the support member 52 and the dielectric material block 50, and the flow path member 51 is supported on the top surface 50a of the dielectric material block 50.

As illustrated in Figure 7, in the state in which the flow path member 51 is sandwiched between the support member 52 and the dielectric material block 50, each of the inlet 61 and the outlet 65 of the flow path member 51 is isolated from the ambient air by the corresponding slit 54a of the evaporation preventing member 54. The liquid sample having been injected into the flow path 60 is thus prevented from evaporating.

The optical system 15 comprises a collimator lens 15a for collimating the laser beam 13, which has been radiated out in a state of divergent light from the laser beam source 14. The optical system 15 also comprises a semi-transparent mirror 15c for splitting the collimated laser beam 13 into two beams. The optical system 15 further comprises a mirror 15d for reflecting the laser beam 13, which has been reflected by the semi-transparent mirror 15c, toward the analysis unit 10. The optical system 15 still further comprises two converging lenses 15b, 15b. One of the converging lenses 15b, 15b converges the laser beam 13, which has passed through the semi-transparent mirror 15c, onto the interface 50m described above. The other converging lens 15b converges the laser beam 13, which has been reflected by the mirror 15d, onto the interface 50n described above.

The laser beam 13 is converged in the manner described above. Therefore, the laser beam 13 contains laser beam components, which impinge at various different incidence angles θ upon each of the interface 50m and the interface 50n. The incidence angles θ upon each of the interface 50m and the interface 50n are set to be not smaller than the total reflection angle. Therefore, the laser beam 13 is totally reflected from each of the interface 50m and the interface 50n. Also, the laser beam 13, which has been reflected from each of the interface 50m and the interface 50n, contains the laser beam components, which have been reflected at various different reflection angles. The optical system 15 may be constituted such that the laser beam 13 impinges in a defocused state upon each of the interface 50m and the interface 50n. In such cases, errors in detection of the state of the surface plasmon resonance are capable of being averaged, and the analysis accuracy is capable of being enhanced.

The laser beam 13 is irradiated so as to impinge as P-polarized light upon each of the interface 50m and the interface 50n. In order for the laser beam 13 to impinge as the P-polarized light upon each of the interface 50m and the interface 50n, the laser beam source 14 may be located such that the direction of polarization of the laser beam 13 may coincide with the predetermined direction described above. Alternatively, the direction of polarization of the laser beam 13 may be controlled by use of a wave plate.

As illustrated in Figure 9, in this embodiment, the laser beams 13, 13 are caused to impinge upon the interface 50m and the interface 50n in the parallel manner at the measurement section 63 of each of the flow paths 60, 60, ... of the analysis unit 10. The region of the metal film 55, which region is located on the interface 50m, is utilized as a reference region, to which a ligand 73 is not fixed. Also, the region of the metal film 55, which region is located on the interface 50n, is utilized as a detection region, to which the ligand 73 has been fixed. A correction of measurement results with a reference technique, which will be described later, is thus capable of being made.

The first embodiment of the sample supplying device in accordance with the present invention supplies the sample into each of the flow paths 60, 60, ... of the analysis unit 10 of the surface plasmon sensor 1 constituted in the manner described above. The first embodiment of the sample supplying device in accordance with the present invention will be described hereinbelow with reference to Figure 8. Figure 8 is a schematic view showing the first embodiment of the sample supplying device in accordance with the present invention.

With reference to Figure 8, a sample supplying device 80 comprises a main body 81, which is provided with an inlet pipette tip fitting section 83 and an outlet pipette tip fitting section 84. The sample supplying device 80 also comprises an inlet piston (not shown), which is located within the main body 81. The inlet piston is associated with the inlet pipette tip fitting section 83 and is capable of being operated for sucking air through the inlet pipette tip fitting section 83 and discharging air through the inlet pipette tip fitting section 83. The sample supplying device 80 further comprises a sample reservoir section (not shown), which is located within the main body 81. The sample reservoir section is associated with the outlet pipette tip fitting section 84 and reserves the sample, which has entered from the outlet pipette tip fitting section 84. The sample supplying device 80 still further comprises an operating section 82 for operating the inlet piston. The sample supplying device 80 also comprises an inlet pipette tip 90, which is capable of being releasably fitted onto the inlet pipette tip fitting section 83. The sample supplying device 80 further comprises an outlet pipette tip 91, which is capable of being releasably fitted onto the outlet pipette tip fitting section 84 . The outlet pipette tip fitting section 84 is provided with a check valve (not shown) for preventing the sample, which has entered from the side of the outlet pipette tip 91, from undergoing a back flow.

The spacing between a center point of the inlet pipette tip fitting section 83 and the center point of the outlet pipette tip fitting section 84 is approximately equal to the spacing between the center point of the inlet 61 of the flow path 60 and the center point of the outlet 65 of the flow path 60. In the state, in which the inlet pipette tip 90 has been fitted onto the inlet pipette tip fitting section 83, and in which the outlet pipette tip 91 has been fitted onto the outlet pipette tip fitting section 84, an orifice of the inlet pipette tip 90 is inserted into the inlet 61 of the flow path 60, and the orifice of the outlet pipette tip 91 is inserted into the outlet 65 of the flow path 60. The sample is thus capable of being moved from the inlet pipette tip 90 to the outlet pipette tip 91.

The inlet pipette tip 90 is the disposable type of the pipette tip, which is capable of being releasably fitted onto the inlet pipette tip fitting section 83. Also, the outlet pipette tip 91 is the disposable type of the pipette tip, which is capable of being releasably fitted onto the outlet pipette tip fitting section 84.

Also, an outside diameter of the orifice section of the inlet pipette tip 90 may be set to be approximately equal to an inside diameter of the inlet 61 of the flow path 60 (or the inside diameter of the pipette receiving hole 52a of the support member 52). Further, the outside diameter of the orifice section of the outlet pipette tip 91 may be set to be approximately equal to the inside diameter of the outlet 65 of the flow path 60 (or the inside diameter of the pipette receiving hole 52a of the support member 52). In such cases, at the time at which the sample supplying device 80 is inserted into the analysis unit 10, unexpected mixing-in of air bubbles and sample evaporation are capable of being prevented from occurring.

How an analysis of a sample is made with the surface plasmon sensor 1 having the constitution described above will be described hereinbelow.

As illustrated in Figure 1, before the measurement is made, the analysis unit 10 is moved from a constant temperature chamber 2 toward the position for measurement on an analysis unit support section 11. The analysis unit support section 11 is provided with a rail 11a for engaging with the slide groove 50e of the dielectric material block 50. Therefore, at the time of the movement of the analysis unit 10, a high position accuracy is capable of being obtained. Also, after the analysis unit 10 has been set on the analysis unit support section 11, the vertical protrusions 50d, 50d, ... having been formed on the dielectric material block 50 of the analysis unit 10 are held by securing means (not shown) . The analysis unit 10 is thus secured at the position for measurement on the analysis unit support section 11.

Thereafter, as illustrated in Figure 9, the inlet pipette tip 90, into which a buffer 72 containing an analyte has been sucked as the liquid sample, is inserted into the inlet 61 of the flow path member 51. Also, the outlet pipette tip 91 is inserted into the outlet 65 of the flow path member 51. The operating section 82 of the sample supplying device 80 is then operated in order to deliver the buffer 72 from the inlet pipette tip 90. The buffer 72 is thus supplied to the measurement section 63 of the flow path 60 of the analysis unit 10.

Before the buffer 72 is thus supplied to the measurement section 63 of the flowpath 60 of the analysis unit 10, a protective liquid 75, which acts to prevent a ligand 73 from drying, (or a buffer having been utilized in the previous measurement, or the like) has been injected into the flow path 60. Therefore, such that the protective liquid 75 (or the buffer having been utilized in the previous measurement, or the like) and the buffer 72, which is to be utilized for the current measurement, may not be mixed together, an air bubble 74 is previously sucked into the orifice of the inlet pipette tip 90. At the time at which the buffer 72 is injected into the flow path 60, the air bubble 74 is caused to enter into the flow path 60 before the buffer 72 enters into the flow path 60. In this manner, the buffer 72 and the protective liquid 75 (or the buffer having been utilized in the previous measurement, or the like) are separated from each other by the air bubble 74. Therefore, the buffer 72 and the protective liquid 75 (or the buffer having been utilized in the previous measurement, or the like) are capable of being prevented from being mixed together. Also, all of the protective liquid 75 (or the buffer having been utilized in the previous measurement, or the like) is expelled by the air bubble 74 and is thus discharged into the outlet pipette tip 91.

With the technique for liquid replacement described above, the protective liquid 75 is replaced by the buffer 72. The aforesaid technique for liquid replacement may also be utilized at the time of the replacement of the liquid, such as the sample contained in the flow path 60, e.g. the replacement of a reference buffer by a buffer containing an analyte, or the replacement of a buffer containing an analyte by a reference buffer. In this manner, the liquid mixing at the time of the liquid replacement is capable of being prevented from occurring. Alternatively, in lieu of the aforesaid technique for liquid replacement being utilized, the injection of the liquid, such as the sample, into the flow path 60 may be performed directly.

After the buffer 72 has been supplied into the measurement section 63 of the flow path 60 in the manner described above, the measurement is started. Such that adverse effects, such as unnecessary vibrations, may not occur upon the surface plasmon sensor 1, the sample supplying device 80 is removed from the analysis unit 10 at the time of the measurement.

As illustrated in Figure 3, the laser beam 13, which has been radiated out in the state of divergent light from the laser beam source 14, is converged by the effects of the optical system 15 onto each of the interface 50m and the interface 50n between the dielectric material block 50 and the metal film 55, which interfaces are located below the measurement section 63. At this time, the laser beam 13 contains the laser beam components, which impinge at various different incidence angles θ upon each of the interface 50m and the interface 50n. The incidence angles θ upon each of the interface 50m and the interface 50n are set to be not smaller than the total reflection angle. Therefore, the laser beam 13 is totally reflected from each of the interface 50m and the interface 50n. Also, the laser beam 13, which has been reflected from each of the interface 50m and the interface 50n, contains the laser beam components, which have been reflected at various different reflection angles.

The laser beam 13, which has been totally reflected from the interface 50m and has then been collimated by one of the two collimator lenses 16, 16, and the laser beam 13, which has been totally reflected from the interface 50n and has then been collimated by the other collimator lens 16, are detected respectively by the two photodiode arrays 17, 17. In this embodiment, each of the two photodiode arrays 17, 17 comprises a plurality of photodiodes 17a, 17b, 17c, ..., which arrayed in a line. Each of the two photodiode arrays 17, 17 is located in an orientation such that the array direction of the photodiodes 17a, 17b, 17c, ... is approximately normal to the direction of travel of the collimated laser beam 13 in the plane of the sheet of Figure 3. Therefore, each of the laser beam components of the laser beam 13, which laser beam components have been totally reflected at various different reflection angles from one of the interface 50m and the interface 50n, is received by one of the different photodiodes 17a, 17b, 17c, ...

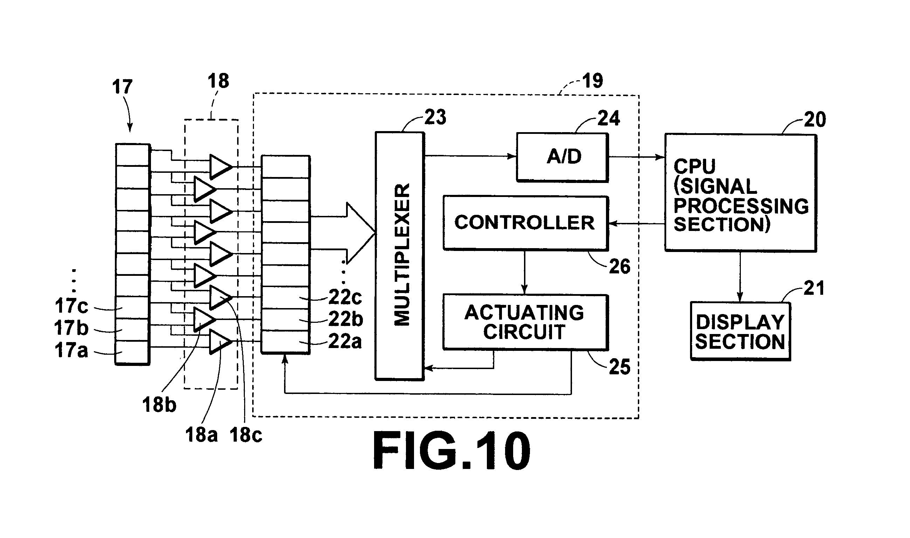

Figure 10 is a block diagram showing an electrical constitution of the measuring system of the surface plasmon sensor 1 of Figure 1. As illustrated in Figure 10, the driver 19 described above comprises sample and hold circuits 22a, 22b, 22c, ..., each of which samples and holds the output of one of differential amplifiers 18a, 18b, 18c, ... of the differential amplifier array 18. The driver 19 also comprises a multiplexer 23 for receiving the outputs of the sample and hold circuits 22a, 22b, 22c, ... The driver 19 further comprises an analog-to-digital converter 24 for digitizing the output of the multiplexer 23 and feeding the digital output into the signal processing section 20. The driver 19 still further comprises an actuating circuit 25 for actuating the multiplexer 23 and the sample and hold circuits 22a, 22b, 22c, ... The driver 19 also comprises a controller 26 for controlling the operations of the actuating circuit 25 in accordance with an instruction given by the signal processing section 20. The differential amplifier array 18, the driver 19, and the signal processing section 20 are constituted so as to perform identical processing in a parallel manner on the inputs fed from the two photodiode arrays 17, 17.

The outputs of the photodiodes 17a, 17b, 17c, ... are fed into the differential amplifiers 18a, 18b, 18c, ... of the differential amplifier array 18. At this time, the outputs of two adjacent photodiodes are fed into one common differential amplifier. Therefore, it may be regarded that the output of each of the differential amplifiers 18a, 18b, 18c, ... represents one of differentiation values obtained from differentiation processing, which is performed on the photo detection signal components obtained from the plurality of the photodiodes 17a, 17b, 17c, ... and is performed with respect to the array direction of the photodiodes 17a, 17b, 17c, ...

The output of each of the differential amplifiers 18a, 18b, 18c, ... is sampled and held with predetermined timing by the corresponding one of the sample and hold circuits 22a, 22b, 22c, ... and is fed into the multiplexer 23. The multiplexer 23 feeds the outputs of the differential amplifiers 18a, 18b, 18c, ..., which outputs have been sampled and held by the sample and hold circuits 22a, 22b, 22c, ..., in predetermined order into the analog-to-digitalconverter24. The analog-to-digital converter 24 digitizes the received outputs and feeds the digital outputs into the signal processing section 20.

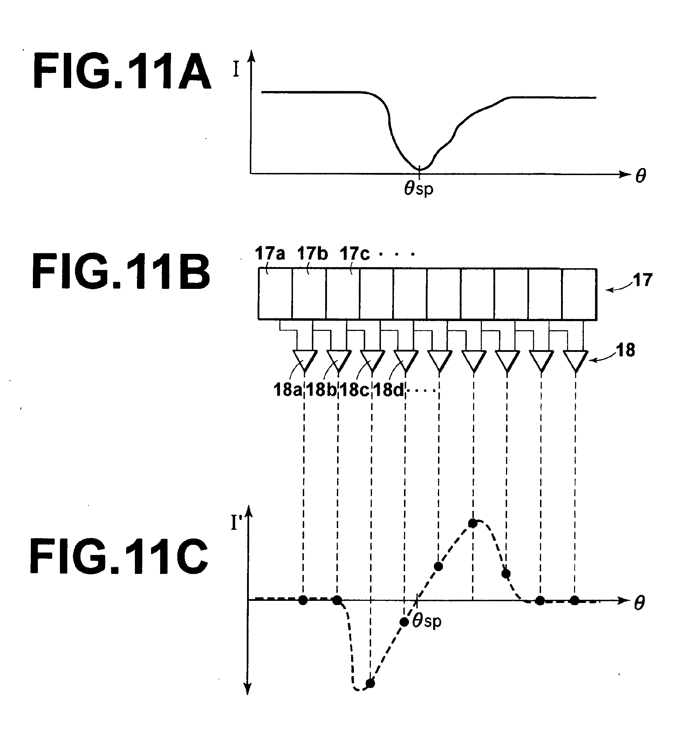

Figure 11A is a graph showing the relationship between the incidence angle θ of the laser beam 13 upon the interface 50m (or the interface 50n) and a detected optical intensity I of the laser beam 13, which has been totally reflected from the interface 50m (or the interface 50n), in the measuring system of the surface plasmon sensor 1 of Figure 1.

The laser beam 13, which has impinged at the specific incidence angle $\theta_{SP}$ upon the interface 50m (or the interface 50n), excites the surface plasmon at the interface between the metal film 55 and the buffer 72. Therefore, as for the laser beam 13, which has impinged at the specific incidence angle $\theta_{SP}$ upon the interface 50m (or the interface 50n), the optical intensity I of the laser beam 13, which has been totally reflected from the interface 50m (or the interface 50n), becomes markedly low. Specifically, the specific incidence angle $\theta_{sp}$ represents the ATR angle $\theta_{sp}$. At the ATR angle $\theta_{sp}$, the optical intensity I of the reflected laser beam 13 takes the minimum value. As indicated by D in Figure 3, the lowering of the optical intensity I of the reflected laser beam 13 appears as a dark line in the reflected laser beam 13.

Figure 11B is an explanatory view showing the photodiodes 17a, 17b, 17c, ... arrayed in a direction in the measuring system of the surface plasmon sensor 1 of Figure 1. As described above, the position of each of the photodiodes 17a, 17b, 17c, ..., which position is taken with respect to the array direction of the photodiodes 17a, 17b, 17c, ..., uniquely corresponds to the incidence angle θ.

Figure 11C is a graph showing the relationship between the position of each of the photodiodes 17a, 17b, 17c, ..., which position is taken with respect to the array direction of the photodiodes 17a, 17b, 17c, ..., i.e. the incidence angle θ, and an output I' of each of the differential amplifiers 18a, 18b, 18c, ... (i.e., the differentiation value of the values of the optical intensity I of the reflected laser beam 13).

In accordance with the outputs I', which are received from the analog-to-digital converter 24 and represents the differentiation values, the signal processing section 20 selects a differential amplifier (in the case of Figures 11A, 11B, and 11C, the differential amplifier 18d), which yields the output closest to the differentiation value I' = 0 corresponding to the ATR angle $\theta_{SP}$, from among the differential amplifiers 18a, 18b, 18c, ... Also, the signal processing section 20 performs predetermined correction processing on the differentiation value I', which is outputted from the thus selected differential amplifier. The signal processing section 20 feeds the information, which represents the differentiation value I' having been subjected to the predetermined correction processing, into the display section 21. It may often occur that a certain differential amplifier yields the output representing the differentiation value I' = 0 corresponding to the ATR angle $\theta_{SP}$. Insuchcases, the certain differential amplifier described above is selected.

Thereafter, at each of the stages after the passage of the predetermined periods of time, the differentiation value I', which has been outputted from the selected differential amplifier and has then been subjected to the predetermined correction processing, is displayed on the display section 21. In cases where the dielectric constant of the substance, which is in contact with the metal film 55 of the analysis unit 10, i.e. the refractive index of the substance, alters, and the ATR angle $\theta_{SP}$ alters such that the curve illustrated in Figure 11A shifts horizontally in Figure 11A, the differentiation value I' alters vertically in Figure 11C in accordance with the alteration of the ATR angle $\theta_{sp}$. Therefore, in cases where the differentiation value I' is measured successively with the passage of time, the alteration of the refractive index of the buffer 72 (or the ligand 73), which is in contact with the metal film 55, is capable of being detected.

In particular, at the detection region in the surface plasmon sensor 1, in cases where the analyte contained in the buffer 72 is a specific substance, which is capable of undergoing the binding with the ligand 73, the refractive index of the ligand 73 alters in accordance with the state of the binding of the ligand 73 and the analyte with each other. Therefore, in cases where the differentiation value I' described above is measured successively, detection is capable of being made as to whether the analyte is or is not the specific substance, which is capable of undergoing the binding with the ligand 73.

Also, in the surface plasmon sensor 1, in order for the reference technique to be performed, the metal film 55 has the detection region and the reference region, and the measurements with respect to the detection region and the reference region are made simultaneously. Therefore, with the reference technique, compensation is capable of being made for errors due to an alteration of the temperature of the buffer and disturbance, such as fluctuations of the light source. Accordingly, the measurement accuracy is capable of being enhanced.

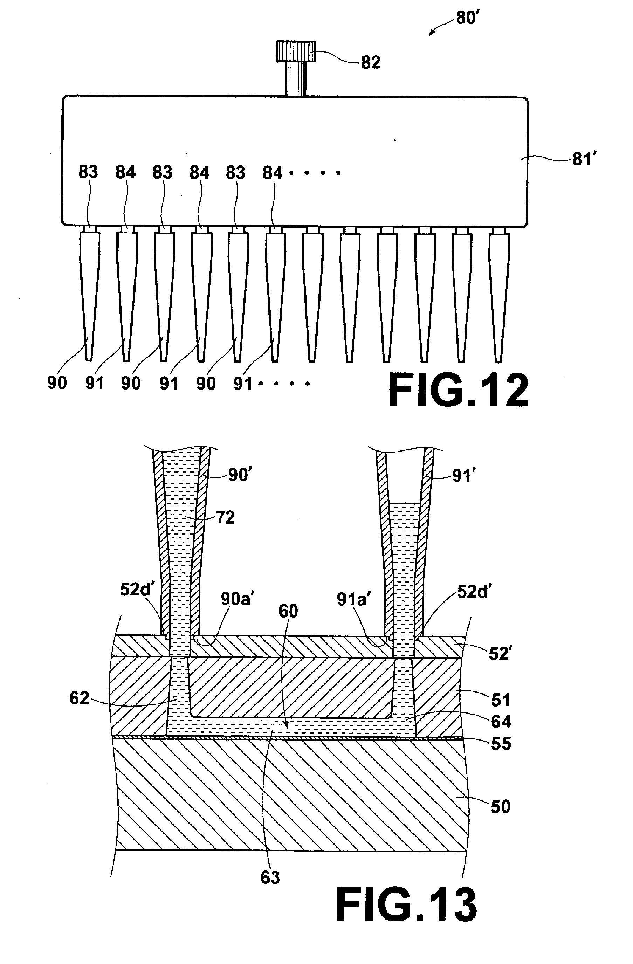

A second embodiment of the sample supplying device in accordance with the present invention will be described hereinbelow with reference to Figure 12. In Figure 12, similar elements are numbered with the same reference numerals with respect to Figure 8. The second embodiment of the sample supplying device in accordance with the present invention is constituted such that sample supplying operations are capable of being performed simultaneously and in a parallel manner with respect to a plurality of flow paths of the flow path member. Figure 12 is a schematic view showing the second embodiment of the sample supplying device in accordance with the present invention.

With reference to Figure 12, a sample supplying device 80' comprises a main body 81' , which is provided with a plurality of sets of inlet pipette tip fitting sections 83, 83, ... and outlet pipette tip fitting sections 84, 84, ... The sample supplying device 80' also comprises an inlet piston (not shown), which is located within the main body 81'. The inlet piston is associated with each of the inlet pipette tip fitting sections 83, 83, ... and is capable of being operated for sucking air through each of the inlet pipette tip fitting sections 83, 83, ... and discharging air through each of the inlet pipette tip fitting sections 83, 83, ... The sample supplying device 80' further comprises the operating section 82 for operating the inlet piston. The sample supplying device 80' still further comprises a plurality of inlet pipette tips 90, 90, ..., each of which is capable of being releasably fitted onto one of the inlet pipette tip fitting sections 83, 83, ... The sample supplying device 80' also comprises a plurality of outlet pipette tips 91, 91, ..., each of which is capable of being releasably fitted onto one of the outlet pipette tip fitting sections 84, 84, ...

With the sample supplying device 80' constituted in the manner described above, the sample supplying operations are capable of being performed simultaneously and in a parallel manner with respect to the plurality of the flow paths of the flow path member.

Each of the first and second embodiments of the sample supplying device in accordance with the present invention is provided with the inlet piston, which is associated with the inlet pipette tip fitting section 83 and is capable of being operated for sucking air through the inlet pipette tip fitting section 83 and discharging air through the inlet pipette tip fitting section 83. Alternatively, the sample supplying device in accordance with the present invention may be constituted such that, besides the inlet piston, the sample supplying device further comprises an outlet piston, which is associated with the outlet pipette tip fitting section 84 and is capable of being operated for sucking air through the outlet pipette tip fitting section 84 and discharging air through the outlet pipette tip fitting section 84, and such that the inlet piston and the outlet piston are capable of being controlled with independent control operations.

Also, in the first embodiment of the sample supplying device in accordance with the present invention, the orifice section of the inlet pipette tip 90 is inserted into the inlet 61 of the flow path member 51, the orifice section of the outlet pipette tip 91 is inserted into the outlet 65 of the flow path member 51, and the buffer 72 contained in the inlet pipette tip 90 is injected into the flow path 60 of the flow path member 51. Alternatively, as illustrated in Figure 13, the sample supplying device in accordance with the present invention may be constituted such that each of an orifice 90a' of an inlet pipette tip 90' and an orifice 91a' of an outlet pipette tip 91' is brought into close contact with one of pipette engaging sections 52d', 52d' of a support member 52' located on the flow path member 51, and such that only the buffer 72 contained in the inlet pipette tip 90' is injected into the flow path 60 of the flow path member 51. As another alternative, the pipette tip may be directly brought into close contact with the flow path member 51.

In addition, the sample may be recovered by the outlet pipette tip and discharged from the outlet of the flow path member; and liquid, which is expelled toward the inlet of the flow path by the sample, may be recovered by the inlet pipette chip. That is, the sample may be caused to flow backwards from the outlet to the inlet.

In each of the embodiments described above, the sample supplying device in accordance with the present invention is utilized for the analysis unit of the surface plasmon sensor 1. The sample supplying device in accordance with the present invention is also applicable to various other types of analysis units, such as analysis units of leaky mode sensors.

**Claims**

1. A sample supplying method for supplying a sample into an analysis unit comprising (a) a dielectric material block having a smooth surface, on which surface a thin film layer has been formed, and (b) a flow path member, which is brought into close contact with a top surface of the thin film layer having been formed on the dielectric material block,

   the flow path member being constituted of a measurement section, which stands facing the thin film layer having been formed on the dielectric material block, a supply path extending from an inlet of the flow path member, which inlet is open at a top surface of the flow path member, to one end of the measurement section, and a discharging path extending from the other end of the measurement section to an outlet of the flow path member, which outlet is open at the top surface of the flow path member,

   the flow path member being provided with a f low path, which extends from the inlet of the flow path member through the measurement section of the flow path member to the outlet of the flow path member, such that the sample is capable of flowing through the flow path,

   the method comprising the steps of:

   i) fitting an inlet pipette tip to the inlet of the flow path member, the sample having been sucked into the inlet pipette tip,
   ii) fitting an outlet pipette tip to the outlet of the flow path member,
   iii) delivering the sample, which has been sucked into the inlet pipette tip, from the inlet pipette tip through the inlet of the flow path member into the flow path of the flow path member, and
   iv) recovering a fluid, which has been expelled by the sample from the flow path to the outlet of the flow path member, into the outlet pipette tip.

2. A sample supplying method as defined in Claim 1, wherein:

   the sample is recovered by the outlet pipette tip and is discharged from the outlet of the flow path member; and
   liquid, which is expelled toward the inlet of the flow path by the sample, is recovered by the inlet pipette chip.

3. A sample supplying device for supplying a sample into an analysis unit comprising (a) a dielectric material block having a smooth surface, on which surface a thin film layer has been formed, and (b) a flow path member, which is brought into close contact with a top surface of the thin film layer having been formed on the dielectric material block,

   the flow path member being constituted of a measurement section, which stands facing the thin film layer having been formed on the dielectric material block, a supply path extending from an inlet of the flow path member, which inlet is open at a top surface of the flow path member, to one end of the measurement section, and a discharging path extending from the other end of the measurement section to an outlet of the flow path member, which outlet is open at the top surface of the flow path member,

   the flow path member being provided with a flow path, which extends from the inlet of the flow path member through the measurement section of the flow path member to the outlet of the flow path member, such that the sample is capable of flowing through the flow path,

   the device comprising:

   i) an inlet pipette tip, which is adapted to be fitted to the inlet of the flow path member,
   ii) an outlet pipette tip, which is adapted to be fitted to the outlet of the flow path member,
   iii) an inlet pipette tip fitting section, to which the inlet pipette tip is capable of being releasably fitted,
   iv) an outlet pipette tip fitting section, to which the outlet pipette tip is capable of being releasably fitted, and
   v) an inlet piston, which is associated with the inlet pipette tip fitting section and is capable of being operated for sucking air through the inlet pipette tip fitting section and discharging air through the inlet pipette tip fitting section.

4. A device as defined in Claim 3 wherein the outlet pipette tip fitting section is provided with a check valve for preventing the sample, which has entered from the side of the outlet pipette tip, from undergoing a back flow.

5. A device as defined in Claim 3 or 4 wherein the device further comprises an outlet piston, which is associated with the outlet pipette tip fitting section and is capable of being operated for sucking air through the outlet pipette tip fitting section and discharging air through the outlet pipette tip fitting section, and the inlet piston and the outlet piston are capable of being controlled with independent control operations.

6. A device as defined in Claim 3, 4, or 5 wherein the device comprises a plurality of sets of the inlet pipette tips, the outlet pipette tips, the inlet pipette tip fitting sections, and the outlet pipette tip fitting sections.

**FIG.1**

FIG.2

# FIG.3

EP 1 643 254 A2

**FIG.4**

**FIG.5**

**FIG.6**

**FIG.7**

80

82

81

**FIG.8**

83  84

90  91

90

72

91

75

54a  60  54a

54

53

52

62

51

64

55

50

74  50m  63  50n  73

**FIG.9**

**FIG.10**

EP 1 643 254 A2

# FIG.11A

# FIG.11B

# FIG.11C

**FIG.12**

**FIG.13**